# EUROPÄISCHE PATENTSCHRIFT

(11) **EP 3 064 519 B1**
(45) Veröffentlichungstag und Bekanntmachung des Hinweises auf die Patenterteilung: **19.12.2018**
(21) Anmeldenummer: 15157971.1
(22) Anmeldetag: 06.03.2015
(51) Int. Cl.: C08G 18/72, C08G 18/73, C08G 18/75, C08G 18/08, C08G 18/12, C08G 18/34, C03C 25/10, D06M 15/568

(54) **Wässrige Polyurethanharnstoff-Dispersion, enthaltend freie Säuregruppen**
Aqueous polyurethane urea dispersion containing free acid groups
Dispersion aqueuse d'urée de polyuréthane, contenant des groupes acides libres

(43) Veröffentlichungstag der Anmeldung: 07.09.2016
(73) Patentinhaber: Covestro Deutschland AG, 51373 Leverkusen (DE)
(72) Erfinder: Grablowitz, Hans Georg, 50733 Köln (DE); Feller, Thomas, 42659 Solingen (DE); Kreuter, Martin, 51375 Leverkusen (DE); Janßen, Petra, 47647 Kerken (DE); Gipperich, Ingo, 51373 Leverkusen (DE)
(74) Vertreter: Levpat

(56) Entgegenhaltungen:
- DE-A1- 19 914 885
- US-A1- 2014 249 266

## Beschreibung

Die vorliegende Erfindung betrifft wässrige Polyurethanharnstoff-Dispersionen mit speziellen Aufbaukomponenten, ihr Herstellungsverfahren, ihre Verwendung als Beschichtungsmittel auf Fasern sowie die Verwendung der beschichteten Fasern in einem Verbundwerkstoff.

Beschichtungsmittel, die auf Polyurethanharnstoffen basieren, spielen aufgrund ihrer herausragenden Eigenschaften, wie z.B. hohe Kratzfestigkeit und Kälteflexibilität, eine große Rolle. Aufgrund von steigenden ökologischen und anderen gesetzlichen Bestimmungen kommt dabei den lösemittelfreien, wässrigen Polyurethanharnstoffen eine besondere Bedeutung zu. Beschichtungen, die auf Polyurethanharnstoff-Dispersionen basieren, kommen in unterschiedlichen Anwendungen, wie z.B. der Textilbeschichtung, Kunststoff- und Automobillackierung sowie im Elektronikbereich, zum Einsatz.

Auch die Verwendung von Polyurethanharnstoff-Dispersionen zur Herstellung von Glasfaserschlichten ist beispielsweise aus der DE 199 14 885 A1 oder der EP 2 209 828 A1 bekannt. Solche Schlichten dienen im Wesentlichen der Verhinderung des Abriebs zwischen Glasfasern während ihres Herstellungsprozesses. Zudem weisen Glasfasern, welche mit einer Schlichte überzogen sind, aber auch eine verbesserte Festigkeit und ein verbessertes Fließvermögen auf. Somit werden an den in den Dispersionen enthaltenen Polyurethanharnstoff Anforderungen in Bezug auf die gute Adhäsion und Wechselwirkung mit der Glasfaser gestellt.

Werden solche Glasfasern zur Verstärkung von Kunststoffen verwendet (faserverstärkte Verbundwerkstoffe), muss die Schlichte zudem auch eine gute Verträglichkeit mit dem Kunststoff (Matrix-Werkstoff) gewährleisten, um als vermittelnde Schicht zwischen der Glasfaser und dem Matrix-Werkstoff zu fungieren. Eine gute Anbindung sowohl an den Matrix-Werkstoff als auch die Glasfaser führt zu guten mechanischen Eigenschaften im Sinne der Verstärkung des Matrix-Werkstoffs (z. B. Erhöhung der Querzugfestigkeit oder Druckscherfestigkeit).

Viele solcher Matrix-Werkstoffe basieren auf Epoxy-Harzen. Daher sind insbesondere auch Schlichteformulierungen auf Basis von wässrigen Epoxy-Harzen bekannt, da davon ausgegangen wird, dass hierdurch eine gute Kompatibilität zwischen Schlichte und Matrix-Werkstoff erzielt werden kann (siehe beispielsweise EP 0 293 647 A oder EP 0 741 979 A). Allerdings ist die Verwendung von Epoxy-Harzen zur Beschichtung von Fasern aus gesundheitlichen Gründen nicht für alle Anwendungen möglich und es ist nicht ausgeschlossen, dass die mit Epoxyharzen beschichteten Fasern aufgrund der hohen Reaktivität der Epoxygruppe nicht lagerstabil sind. Daher besteht ein grundsätzliches Interesse an alternativen Schlichteformulierungen.

Die DE 199 14 885 A1 beschreibt Polyurethanharnstoff-Dispersionen, welche mit Dimethylpyrazol blockierte Isocyanatgruppen aufweisen und welche als Schlichte von Glasfasern verwendet werden. Nachteilig an blockierten wässrigen Polyurethanharnstoffdispersionen ist der Umstand, dass bei der üblicherweise forcierten Trocknung der Fasern eine teilweise Deblockierung statt findet und dass das Blockierungsmittel im allgemeinen nach der Abspaltung frei vorliegt was zur Verschlechterung (z.B. Verfärbung) von Eigenschaften der Fasern führen kann.

Aus der EP 2 209 828 A1 sind Schlichtezusammensetzungen auf Basis wässriger Polyurethanharnstoff-Dispersionen bekannt, welche spezielle Aufbaukomponenten enthalten. Eine Optimierung der Verstärkungseigenschaften ist jedoch grundsätzlich wünschenswert.

Ausgehend von diesem Stand der Technik lag der vorliegenden Erfindung die Aufgabe zu Grunde, eine wässrige Polyurethanharnstoff-Dispersion bereitzustellen, welche mindestens einen, vorzugsweise alle der oben genannten Nachteile des Stands der Technik behebt. Insbesondere lag der vorliegenden Erfindung die Aufgabe zu Grunde, eine wässrige Polyurethanharnstoff-Dispersion bereitzustellen, welche als Schlichteformulierung eine gute Verträglichkeit, vorzugsweise eine bessere Verträglichkeit von Fasern und Matrix-Werkstoff bereitstellt. Dadurch soll insbesondere eine Schlichteformulierung bereitgestellt werden, durch die Verbundstoffe mit guten, vorzugsweise besseren mechanischen Eigenschaften, wie beispielsweise guten Querzugsfestigkeiten, erhalten werden. Insbesondere sollen dabei die Eigenschaften der Fasern an sich, wie beispielsweise ihre Farbe, nicht verändert werden.

Diese Aufgaben wurden gelöst durch die Bereitstellung der erfindungsgemäßen wässrigen Polyurethanharnstoff-Dispersion, ihrer Verwendung, der erfindungsgemäßen Faser sowie ihr Herstellungsverfahren und den erfindungsgemäßen Verbundwerkstoff, wie im Folgenden näher beschrieben.

### Dispersion

Gegenstand der vorliegenden Erfindung ist eine wässrige Polyurethanharnstoff-Dispersion, wobei der Polyurethanharnstoff mindestens die folgenden Komponenten als Aufbaukomponenten umfasst:
A) mindestens eine Polyisocyanatverbindung mit einer Funktionalität von ≤ 2,
B) mindestens ein Polyol,
C) mindestens eine Aufbaukomponente, welche sich von den Komponenten B), D) und, falls vorhanden, der Komponente E) unterscheidet und welche mindestens eine gegenüber Isocyanatgruppen reaktive Gruppe und mindestens eine -COOH-Gruppe aufweist, und
D) mindestens ein nicht-ionisches Hydrophilierungsmittel, welches mindestens eine gegenüber Isocyanatgruppen reaktive Gruppe aufweist, sowie
E) gegebenenfalls mindestens eine gegenüber Isocyanatgruppen reaktive, monofunktionelle Verbindung, welche von C) und D) verschieden ist und welche keine ungesättigten Gruppen oder Epoxy-Gruppen aufweist,
dadurch gekennzeichnet,
dass der Polyurethanharnstoff einen Gehalt an -COOH-Gruppen von 0,75 bis 7,50 Gew.-% in Bezug auf das Gesamtgewicht des Polyurethanharnstoffs im getrockneten Zustand aufweist und 0 bis 35 % dieser -COOH-Gruppen neutralisiert sind und
dass 5 bis 50 mol-% der Isocyanatgruppen der Komponente A) mit einer monofunktionellen Komponente umgesetzt sind, wobei die monofunktionelle Komponente ausgewählt wird aus der Gruppe, bestehend aus einer der Komponenten C), D), E) und der Summe einer beliebigen Mischung der Komponenten C), D) und E) unter der Voraussetzung, dass, wenn weder die Komponente C) noch die Komponente D) monofunktionell ist, Komponente E) zwingend als Aufbaukomponente vorhanden ist.

Im Sinne der vorliegenden Erfindung wird ausschließlich der Begriff "Polyurethanharnstoff" verwendet. Der Fachmann weiß, dass ein Polyurethan zusätzliche Harnstoffgruppen aufweist, wenn mindestens eine der Aufbaukomponenten ein Amin ist. Erfindungsgemäß fallen somit in Abhängigkeit der verwendeten Aufbaukomponenten unter den Begriff sowohl Polyurethane sowie Polyurethanharnstoffe.

Bevorzugt bedeuten die Bezugnahmen auf "umfassend", "enthaltend" usw. "im Wesentlichen bestehend aus" und ganz besonders bevorzugt "bestehend aus".

Erfindungsgemäß umfasst die wässrige Polyurethanharnstoff-Dispersion einen Polyurethanharnstoff mit mindestens den Komponenten A), B), C), D) und gegebenenfalls E) als Aufbaukomponenten. Dabei unterscheiden sich die Komponenten A) bis E) jeweils voneinander. Handelt es sich weder bei der Komponente C) noch D) um eine monofunktionelle, gegenüber Isocyanatgruppen reaktive Verbindung, ist die Komponente E) zwingend als Aufbaukomponente vorhanden. Dies bedeutet, dass der Polyurethanharnstoff der erfindungsgemäßen Polyurethanharnstoff-Dispersion immer mindestens eine monofunktionelle Verbindung als Aufbaukomponente aufweist, so dass der erfindungsgemäß definierte Kettenabbruchsgrad von 5 bis 50 mol-% zustande kommt. In diesem Zusammenhang bedeutet "monofunktionell", dass die Komponente nur eine gegenüber Isocyanatgruppen reaktive funktionelle Gruppe aufweist. Diese monofunktionelle Komponente, welche den Kettenabbruchsgrad verursacht, kann auch ausgewählt werden aus der Summe der Komponenten C) und D), C) und E), D) und E) sowie C), D) und E). Diesbezüglich wird im Folgenden vereinzelt und vereinfachend lediglich auf die "monofunktionelle Komponente" Bezug genommen, wobei jede der oben genannten Konstellationen umfasst ist.

Der Polyurethanharnstoff der erfindungsgemäßen Dispersion weist einen Gehalt an -COOH-Gruppen von 0,75 bis 7,50 Gew.-% in Bezug auf das Gesamtgewicht des Polyurethanharnstoffs im getrockneten Zustand auf. Bevorzugt weist der Polyurethanharnstoff einen Gehalt an - COOH-Gruppen von 1,00 bis 5,00 Gew.-%, besonders bevorzugt 1, 25 bis 3,00 Gew.-% in Bezug auf das Gesamtgewicht des Polyurethanharnstoffs im getrockneten Zustand auf.

Die Bestimmung des Gehalts an -COOH-Gruppen in dem Polyurethanharnstoff ist dem Fachmann bekannt. Bevorzugt wählt der Fachmann die Aufbaukomponente C) so, dass eine quantitative Umsetzung der Komponente C) in den Polyurethanharnstoff erfolgt (theoretische Gew.-% der -COOH-Gruppen in der eingesetzten Komponente C) entsprechen in Abhängigkeit der Menge der eingesetzten Komponente C) den resultierenden Gew.-% der -COOH-Gruppen im Polyurethanharnstoff). Ebenso kann der Fachmann die Gew.-% der -COOH-Gruppen im Polyurethanharnstoff auch nachträglich bestimmen. Bevorzugt kann dies über eine Titration oder mittels ¹H-NMR-Messungen auf einer dem Fachmann bekannten Weise erfolgen.

Erfindungsgemäß sind 0 bis 35 % dieser -COOH-Gruppen neutralisiert. Damit handelt es sich erfindungsgemäß um eine Polyurethanharnstoff-Dispersion, welche einen Polyurethanharnstoff umfasst, der im Wesentlichen keine ionische Modifizierung aufweist. Hierunter wird im Rahmen der vorliegenden Erfindung verstanden, dass die erfindungsgemäß zu verwendenden Polyurethanharnstoffe im Wesentlichen keine neutralisierten Carboxygruppen enthalten, wobei höchstens 0 bis 35 %, besonders bevorzugt 0 bis 10 %, ganz besonders bevorzugt 0 bis 2 % der Säuregruppen neutralisiert sind.. Damit ist der Polyurethanharnstoff bevorzugt nicht-ionisch, d. h. er umfasst keine Aufbaukomponente, welche eine ionische Gruppe enthält. Solche ionischen Gruppen können neben den erwähnten Carboxygruppen insbesondere auch Sulfonat-, Carboxylat-, Phosphat- und Phosphonatgruppen sein.

Es hat sich herausgestellt, dass sich aus den erfindungsgemäßen Polyurethanharnstoff-Dispersionen stabile Schlichtenformulierungen herstellen lassen. Diese enthalten normalerweise kationische Zusätze, so dass es vorteilhaft ist, die -COOH-Gruppen möglichst wenig zu neutralisieren. Gleichzeitig hat sich herausgestellt, dass durch den erfindungsgemäß definierten Neutralisierungsgrad besonders stabile Verbundwerkstoffe erhältlich sind.

0 bis 35 %, bevorzugt 0 bis 25 %, besonders bevorzugt 0 bis 10 %, ganz besonders bevorzugt 0 bis 5 %, insbesondere bevorzugt 0 bis 2,5 % und am bevorzugsten 0% der -COOH-Gruppen des Polyurethanharnstoffs sind neutralisiert. Der Neutralisationsgrad ist als Verhältnis der -COOH-Gruppen zu den mit einer Base neutralisierten -COOH-Gruppen definiert. Damit weist der erfindungsgemäße Polyurethanharnstoff freie Säuregruppen auf. Daher weist die erfindungsgemäße Polyurethandispersion bevorzugt einen pH-Wert bei 25 °C von kleiner 7, besonders bevorzugt kleiner 6 und insbesondere bevorzugt von 3 bis 5,8 auf.

Erfindungsgemäß sind 5 bis 50 mol-% der Isocyanatgruppen der Komponente A) mit einer monofunktionellen Komponente umgesetzt, wobei die monofunktionelle Komponente ausgewählt wird aus der Gruppe, bestehend aus einer der Komponenten C), D), E) und der Summe einer beliebigen Mischung der Komponenten C), D) und E) unter der Voraussetzung, dass, wenn weder die Komponente C) noch die Komponente D) monofunktionell ist, Komponente E) zwingend als Aufbaukomponente vorhanden ist. Damit sind 5 bis 50 mol-% der eingesetzten Isocyanatgruppen der Komponente A) mittels eines Kettenabbrechers, d. h. einer Verbindung, welche nur eine gegenüber Isocyanatgruppen reaktive Funktion aufweist, terminiert.

Der angegebene Kettenabbruchgrad beschreibt das prozentuale molare Verhältnis aller gegenüber den Isocyanatgruppen unter den gegebenen Reaktionsbedingungen monofunktionell reagierenden Verbindungen, welche ausgewählt werden aus der Gruppe, bestehend aus den Komponenten C), D), E) und beliebigen Mischungen dieser Komponenten, wie oben beschrieben, mit den Isocyanatgruppen der Komponente A).

Bevorzugt sind 20 bis 48 mol-%, besonders bevorzugt 22 bis 45 mol-%, ganz besonders bevorzugt 25 bis 40 mol-% der Isocyanatgruppen der Komponente A) mit der speziellen monofunktionellen Komponente umgesetzt. Es hat sich herausgestellt, dass der Anteil an mittels monofunktionellen Verbindungen abgebrochenen Ketten des Polyurethanharnstoffs der vorliegenden Erfindung in diesem definierten Bereich dazu führt, dass die Molmasse des Polyurethanharnstoffes gering gehalten wird, so dass die Viskosität der Polyurethanharnstoff-Dispersion optimal für den Einsatz in Beschichtungssysteme ist. Insbesondere hat sich herausgestellt, dass die Molmasse und damit die Löslichkeit und Schmelz-Viskosität der resultierenden Polyurethanharnstoffe durch diesen Kettenabbruchsgrad optimal für den Einsatz in oder als Schlichteformulierung, insbesondere für Glasfaserschlichten, sind.

In einer bevorzugten Ausführungsform der vorliegenden Erfindung weist der Polyurethanharnstoff der erfindungsgemäßen Polyurethanharnstoff-Dispersion einen Gehalt an - COOH-Gruppen von 0,75- 7,50 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 20 bis 48 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer weiteren bevorzugten Ausführungsform der vorliegenden Erfindung weist der Polyurethanharnstoff der erfindungsgemäßen Polyurethanharnstoff-Dispersion einen Gehalt an - COOH-Gruppen von 0,75- 7,50 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 22 bis 45 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer weitern bevorzugten Ausführungsform der vorliegenden Erfindung weist der Polyurethanharnstoff der erfindungsgemäßen Polyurethanharnstoff-Dispersion einen Gehalt an - COOH-Gruppen von 0,75- 7,50 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 25 bis 40 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,00 - 5,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 20 bis 48 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,00 - 5,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 22 bis 45 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,00 - 5,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 25 bis 40 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,25 - 3,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 20 bis 48 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,25 - 3,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 22 bis 45 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

In einer ebenso bevorzugten Ausführungsform der vorliegenden Erfindung weist der Polyurethanharnstoff der erfindungsgemäßen Polyurethanharnstoff-Dispersion einen Gehalt an - COOH-Gruppen von 1,25 - 3,00 Gew.-% in Bezug auf das Gesamtgewicht des Polyurethanharnstoffs im getrockneten Zustand auf, wobei 0 bis 10 % der -COOH-Gruppen des Polyurethanharnstoffs neutralisiert sind und 25 bis 40 mol-% der Isocyanatgruppen der Komponente A) mit mindestens einer der definierten monofunktionellen Komponente umgesetzt sind. In dieser Ausführungsform ist des Weiteren bevorzugt, dass 0 bis 2 %, besonders bevorzugt 0 % der -COOH-Gruppen neutralisiert sind.

Es hat sich herausgestellt, dass durch die spezielle Kombination des Gehalts an -COOH-Gruppen, ihres Neutralisierungsgrads sowie des Kettenabbruchsgrads Polyurethanharnstoff-Dispersionen erhalten werden, welche zum einen eine gute Verarbeitbarkeit, beispielsweise durch ihre Schmelz-Viskosität und Löslichkeit in dem zu verarbeitenden Matrix-Werkstoff, und Eignung als oder in Schlichteformulierung aufweisen. Zum anderen führt diese spezielle Eigenschaftskombination aber auch zu einer guten Verträglichkeit der Schlichte mit der Faser, insbesondere Glasfaser, und gleichzeitig auch mit dem Matrix-Werkstoff. Daher kann erfindungsgemäß ein Verbundwerkstoff erhalten werden, welcher hervorragende mechanische Eigenschaften aufweist. Besonders bevorzugt kann durch die oben genannte spezielle Kombination des Gehalts an -COOH-Gruppen, ihres Neutralisierungsgrads und des Kettenabbruchsgrads ein Verbundwerkstoff mit in Bezug auf die einzelnen Aufbaukomponente des Polyurethanharnstoffs überadditiven mechanischen Eigenschaften, insbesondere in Bezug auf die Querzugsfestigkeit erhalten werden (synergistischer Effekt). Dies bedeutet, dass die resultierende Querzugsfestigkeit des Verbundwerkstoffs insgesamt besser ist als auf Basis der einzelnen Merkmale des Gehalts an -COOH-Gruppen, des Neutralisierungsgrads und des Kettenabbruchsgrads zu erwarten wäre.

Geeignete Polyisocyanate der Komponente A) sind die dem Fachmann an sich bekannten aromatischen, araliphatischen, aliphatischen oder cycloaliphatischen Polyisocyanate, welche eine Funktionalität ≤ 2 aufweisen. Geeignete Polyisocyanate sind z.B. 1,4-Butylendiisocyanat, 1,6-Hexamethylendiisocyanat (HDI), Isophorondiisocyanat (IPDI), 1,5-Pentymethylendiisocyanat 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethan-diisocyanat, 1,3- und 1,4-Bis-(2-isocyanato-prop-2-yl)-benzol (TMXDI), 1,3-Bis(isocyanato-methyl)benzol (XDI), (S)-Alkyl-2,6-diisocyanato-hexanoate oder (L)-Alkyl-2,6-diisocyanatohexanoate.

Bevorzugt handelt es sich bei der Komponente A) um Polyisocyanate oder Polyisocyanatgemische der vorstehend genannten Art mit ausschließlich aliphatisch und/oder cycloaliphatisch gebundenen Isocyanatgruppen mit einer mittleren Funktionalität von 1 bis 2, bevorzugt 2.

Besonders bevorzugt sind Isophorondiisocyanat, 1,6-Hexamethylendiisocyanat (HDI) sowie deren Mischungen.

Als Komponente B) einsetzbare Polyole weisen bevorzugt ein zahlenmittleres Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt bevorzugt 22 bis 400 mg KOH/g, bevorzugt 30 bis 300 mg KOH/g und besonders bevorzugt 40 bis 250 mg KOH/g. Sie weisen bevorzugt eine OH-Funktionalität von 1,5 bis 6, bevorzugt von 1,8 bis 3 und besonders bevorzugt von 1,9 bis 2,1 auf. Soweit nicht anders angegeben, werden die angegebenen Molekulargewichte mittels Gelpermeationschromatographie gegen eine Universalkalibrierung gemessen.

Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyethercarbonatpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole oder Polycarbonatpolyole, besonders bevorzugt sind Polyesterpolyole. Erfindungsgemäß besonders bevorzugt ist die Komponente B) dadurch gekennzeichnet, dass sie mindestens ein aliphatisches Polyesterpolyol ist. Es hat sich herausgestellt, dass die Eignung der erfindungsgemäßen Polyurethanharnstoff-Dispersion in oder als Schlichteformulierung in diesem Fall besonders gut ist, da sowohl eine gute Verträglichkeit mit der Faser, insbesondere Glasfaser, als auch mit dem Matrix-Werkstoff erzielt werden kann.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether B) weisen bevorzugt OH-Funktionalitäten von 1,8 bis 6,0, bevorzugt 2,0 bis 4,0, OH-Zahlen von 50 bis 700, bevorzugt von 100 bis 600 mg KOH/g Feststoff und Molekulargewichte Mₙ von 106 bis 4 000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente B) sind Polypropylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole sowie deren Mischungen.

Gut geeignete Beispiele für Polyesterpolyole sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Triemthylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure und Bernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Weiterhin eignen sich auch solche Polyesterpolyole, welche durch die Polymerisation von nachwachsenden Rohstoffen zugänglich sind. Beispielhaft kann hier die Verwendung von Bernsteinsäure, welche durch einen Fermentationsprozess, wie beispielsweise beschrieben in der DE 10 2008 051727 A1 oder DE 10 2007 019184 A1, erhalten wird, erwähnt werden.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. Caprolacton, Butyrolacton und Homologe.

Bevorzugt sind Polyesterpolyole B) auf Basis von Butandiol und/oder Neopentylglykol und/oder Hexandiol und/oder Ethylenglykol und/oder Diethylenglykol mit Adipinsäure und/oder Phtalsäure und/oder Isophtalsäure. Besonders bevorzugt sind Polyesterpolyole B) auf Basis von Butandiol und/oder Neopentylglykol und/oder Hexandiol mit Adipinsäure und/oder Isophtalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2 und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole B) auf Basis von Dimethylcarbonat und Hexandiol und/oder Butandiol und/oder Caprolacton. Ganz besonders bevorzugt sind Polycarbonatpolyole B) auf Basis von Dimethylcarbonat und Hexandiol und/oder Caprolacton.

Bei der Komponente C) handelt es sich um eine Aufbaukomponente, welche sich von den Komponenten B), D) und, falls vorhanden, der Komponente E) unterscheidet und welche mindestens eine gegenüber Isocyanatgruppen reaktive Gruppe und mindestens eine -COOH-Gruppe aufweist. Bevorzugt wird die Komponente C) ausgewählt aus der Gruppe, bestehend aus Monohydroxycarbonsäuren, Dihydroxycarbonsäuren, Trihydroxycarbonsäuren, Dihydroxydicarbonsäuren, Monoaminocarbonsäuren, Diaminocarbonsäuren, Triaminocarbonsäuren und beliebigen Mischungen davon.

Ganz besonders bevorzugt ist die Komponente C) eine oder mehrere Verbindungen, welche ausgewählt werden aus der Gruppe, bestehend aus Dimethylolpropionsäure, Dimethylolbuttersäure, Dimethylolessigsäure, Dihydroxybemsteinsäure, Hyxdroxypivalinsäure, Hydroxyessigsäure, Hydroxypropionsäure, 6-Aminohexansäure, Alanin, N-(2-Amminoethyl)-β-alanin, Aminoundecansäure, 8-Aminooctansäure, 5-Aminopentansäure, 4-Amino-buttersäure, Aminobenzoesäure, 4-Aminomethylcyclohexancarbonsäure, 2-Aminohexansäure, 4-Aminocyclohexan-carbonsäure, 12-Aminododecansäure und 9-Aminononacarbonsäure.

Komponente D) ist mindestens ein nicht-ionisches Hydrophilierungsmittel, welches mindestens eine gegenüber Isocyanatgruppen reaktive Gruppe aufweist. Hierbei hat der Begriff "nicht-ionisch" bevorzugt die bereits oben genannten Bedeutungen. Diese Komponente dient der Dispergierbarkeit des Polyurethanharnstoffs in Wasser. Bevorzugt ist die Komponente D) eine monofunktionelle Polyethylenglykol-haltige Komponente, deren Anteil an Polyethylenglykol mindestens 50 Gew.-% beträgt und eine Molmasse Mn von 1200 g/mol bis 3000 g/mol aufweist. Wie bereits oben beschrieben, wird in diesem Fall, in dem die Komponente D) eine monofunktionelle Verbindung ist, ihre Reaktion mit einer Isocyanatgruppe zum Kettenabbruch hinzugezählt.

Geeignete nicht-ionisch hydrophilierende, monofunktionelle Verbindungen entsprechend der Definition der Komponente D) sind z.B. Polyoxyalkylenether, die nur eine Hydroxy- oder Aminogruppe enthalten. Diese Polyether enthalten einen Anteil von 50 Gew.-% bis 100 Gew.-% an Bausteinen, die vom Ethylenoxid abgeleitet sind, bevorzugt 70 Gew.-% bis 100 Gew-% und besonders bevorzugt 80 Gew.-% bis 100 Gew.-% wie sie in an sich bekannter Weise durch Alkoxylierung der unter B) genannten Startermoleküle zugänglich sind. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Die Molmasse Mₙ dieser Bausteine beträgt 300 g/mol bis 6000 g/mol, bevorzugt 1500 g/mol bis 3000 g/mol und besonders bevorzugt 2000 g/mol bis 3000 g/mol.

Geeignete derartige nichtionisch hydrophilierende, monofunktionelle Verbindungen sind beispielsweise monofunktionelle Alkoxypolyethylenglycole wie z.B. Methoxypolyethylenglykole (MPEG Carbowax® 2000 oder Methoxy PEG-40, Molgewichtsbereich 1800 bis 2200, The Dow Chemical Company), monofunktionelle Polyethermonoalkylether wie z.B. LB 25 aufgebaut aus Butanol und Ethylenoxid sowie Propylenoxid, mit einer mittleren Molmasse Mₙ von 2250 g/mol von Bayer Material Science, auch solche Verbindungen die gegenüber NCO-Gruppen zwei reaktive Gruppen aufweisen ( z.B.Ymer 120 N, Perstorp), monofunktionelle Polyetheramine (Jeffamine® M 1000, PO/EO mol-Verhältnis 3/19 und M 2070, PO/EO mol-Verhältnis 10/31, Huntsman Corp.).

Bevorzugt werden als D) MPEG Carbowax® 2000, LB 25 oder Jeffamine® M 2070 eingesetzt. Besonders bevorzugt sind MPEG Carbowax® 2000 oder LB 25.

Bei der optionalen Komponente E) handelt es sich um mindestens eine gegenüber Isocyanatgruppen reaktive, monofunktionelle Verbindung, welche von C) und D) verschieden ist und welche keine ungesättigten Gruppen oder Epoxy-Gruppen aufweist. In einer bevorzugten Ausführungsform ist Komponente E) eine zwingend vorhandene Aufbaukomponente des Polyurethanharnstoffs. Bevorzugt wird unter dem Begriff "monofunktionell" in Bezug auf Komponente E) eine Verbindung verstanden, welche unter den gegebenen Reaktionsbedingungen nur eine gegenüber Isocyanatgruppen reaktive Funktion aufweist.

Bevorzugt wird Komponente E) ausgewählt aus der Gruppe, bestehend aus Monoaminen, insbesondere mono-sekundären Aminen oder Monoalkoholen. Genannt seien hier beispielsweise Ethanol, n-Butanol, Ethylenglykol-monobutylether, 2-Ethylhexanol, 1-Octanol, 1-Dodecanol, 1-Hexadecanol, Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin und geeignete substituierte Derivate davon, Amidamine aus diprimären Aminen und Monocarbonsäuren, Monoketim von diprimären Aminen, primäre/tertiäre Amine, wie N,N-Dimethyl¬aminopropylamin. Darüber hinaus können auch Verbindungen die neben einer Aminogruppe (primär oder sekundär) auch OH-Gruppen aufweisen, die aber unter den gegebenen Reaktionsbedingungen nicht mit den Isocyanatgruppen reagieren, eingesetzt werden. Beispiele hierfür sind sekundäre Amine, wie Diethanolamin" Ethanolamin, 2-(2-aminoethoxy)ethanol, 2-Amino-2-methyl-1,3-propanediol.

Bevorzugt handelt es sich bei der Verbindung um Ethylenglykolmonobutylether und/oder Diethanolamin.

Wenn die Komponente E) primäre oder sekundäre Aminogruppen aufweist, dann wird die Komponente E) bevorzugt mit dem NCO-funktionellen Prepolymer, welches durch die Reaktion zumindest der Komponenten A), B), C) und D) auf für den Fachmann bekannte Weise erhalten wird, zur Reaktion gebracht. Wenn die Komponente E) ausschließlich OH-Gruppen enthält so erfolgt die Reaktion bevorzugt direkt mit dem Polyisocyanat A) bei der Herstellung des NCO-funktionellen Prepolymeren.

Neben den oben beschriebenen Komponenten A) bis D) und optional E) kann der Polyurethanharnstoff der erfindungsgemäßen Dispersion weitere, in der Polyurethanchemie gängige Aufbaukomponenten aufweisen.

Besonders bevorzugt wird zusätzlich eine difunktionelle NCO-reaktive Verbindung zur Kettenverlängerung eingesetzt. Dabei handelt es sich bevorzugt um mindestens ein Polyamin. Die zur Kettenverlängerung eingesetzten Polyamine sind bevorzugt Di- oder Polyamine sowie Dihydrazide, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin, Carbohydrazid oder Adipinsäuredihydrazid. Bevorzugt sind Carbohydrazid und/oder Hydrazin und/oder Isophorondiamin (IPDA) und/oder Ethylendiamin. Besonders bevorzugt sind Carbohydrazid und/oder Isophorondiamin und/oder Ethylendiamin. Ganz besonders bevorzugt ist eine Mischung aus Carbohydrazid und IPDA.

Zur Herstellung der erfindungsgemäßen Polyurethanharnstoff-Dispersionen können alle aus dem Stand der Technik bekannten Verfahren wie z.B. Prepolymer-Mischverfahren, Acetonverfahren oder Schmelzdipergierverfahren verwendet werden. Bevorzugt wird die Polyurethanharnstoff-Dispersion nach dem Aceton-Verfahren hergestellt.

Für die Herstellung der Polyurethanharnstoff -Dispersion nach dem Aceton-Verfahren werden üblicherweise die Bestandteile B), C) D) und optional E), die keine primären oder sekundären Aminogruppen aufweisen dürfen, und die Polyisocyanatkomponente A) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt sind methallorganische Verbindungen wie z.B. Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon.

Anschließend werden die gegebenenfalls zu Beginn der Reaktion noch nicht zugegebenen Bestandteile von A) -E) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten A), B), C) D) und ggf. E) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden die optionale Komponente E) und/oder gegebenenfalls mögliche NH₂- und/oder NH-funktionelle Komponenten, bevorzugt die oben beschriebenen Polyamine zur Kettenverlängerung, mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung in einem Lösungsmittel vor der Dispergierung in Wasser durchgeführt. Wenn Wasser oder organische Lösemittel als Verdünnungsmittel mit verwendet werden so beträgt die Konzentration bevorzugt 30bis 80 Gew.-%.

Zur Herstellung der Polyurethanharnstoff-Dispersion wird das gelöste Polyurethanharnstoffpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

In einer weiteren Ausführungsform können die erfindungsgemäßen Dispersionen auch harnstoffgruppenfrei hergestellt werden, wenn die optionale Komponente E) keine primären oder sekundären Aminogruppen aufweist, sonst aber alle oben aufgeführten Merkmale des Kettenabbruchgrades und des Säuregehaltes sowie des Neutralisationsgrads erfüllt sind. Dabei ist das molare NCO / OH-Verhältnis ≤ 1 und es erfolgt kein Kettenverlängerungsschritt.

Der Feststoffgehalt der erfindungsgemäßen Polyurethanpolyharnstoff-Dispersion liegt bevorzugt zwischen 20 bis 70 Gew.-%, bevorzugt 25 bis 65 Gew.-% und besonders bevorzugt zwischen 30 bis 60 Gew.-%.

Erfindungsgemäß ist die Dispersion wässrig. Dies bedeutet bevorzugt, dass sie im Wesentlichen kein organisches Lösungsmittel mehr enthält. Der Restgehalt an organischem Lösungsmittel ist bevorzugt unter 5 Gew.-%, besonders bevorzugt unter 3 Gew.-% und ganz besonders bevorzugt unter 1 Gew.-% des Gesamtgewichts der Polyurethanharnstoff-Dispersion.

Bevorzugt umfass der Polyurethanharnstoff der erfindungsgemäßen Dispersion 5 bis 40, besonders bevorzugt 10 bis 30 Gew.-% der Komponente A), 30 bis 85 Gew.-%, besonders bevorzugt 40 bis 80 Gew.-% der Komponente B), 1 bis 12 Gew.-%, besonders bevorzugt 2 bis 10 Gew.-% der Komponente C), 5 bis 25 Gew.-%, besonders bevorzugt 8 bis 20 Gew.-% der Komponente D) und, falls vorhanden, 1 bis 15 Gew.-%, besonders bevorzugt 4 bis 12 Gew.-% der Komponente E), wobei die Summe der Aufbaukomponenten A) bis D) und gegebenenfalls E) immer 100 Gew.-% ergibt (dies schließt nicht aus, dass der Polyurethanharnstoff noch weitere zusätzliche Aufbaukomponenten umfasst; die angegebenen Gewichtsprozente definieren nur die Verhältnisse der Gewichtsprozente A) bis D) und gegebenenfalls E) zueinander).

Die erfindungsgemäße Polyurethanharnstoff-Dispersion weist bevorzugt eine Viskosität bei 23 °C von 10 bis 750, besonders bevorzugt 20 bis 500, ganz besonders bevorzugt von 30 bis 450 mPas auf. Die Viskosität wird bevorzugt mittels eines Haake-Viskosimeters bei einer Scherrate von 45 s-1 bestimmt.

Die erfindungsgemäße Polyurethanharnstoff-Dispersion weist bevorzugt eine mittlere Teilchengröße von 50 bis 700 nm, besonders bevorzugt 60 bis 600 nm und ganz besonders bevorzugt von 70 bis 500 nm auf. Die mittleren Teilchengrößen (MTG) werden bevorzugt mittels statischer Lichtstreuung ermittelt (Malvern Instruments, Typ: Zetasizer 1000). Dabei wird Wasser als Lösungsmittel verwendet und die Messung findet bei 25 °C statt. Bei den mittleren Teilchengrößen handelt es sich jeweils um den D50-Wert des Z-Mittels.

### Verwendung

In einem weiteren Aspekt betrifft die vorliegende Erfindung die Verwendung der erfindungsgemäßen wässrigen Polyurethanharnstoff-Dispersion in sämtlichen Ausgestaltungen und Ausführungsformen zur Herstellung von Beschichtungsmitteln. Dabei ist es besonders bevorzugt, dass das Beschichtungsmittel eine Glasfaserschlichte ist.

### Beschichtungsmittel

In einem weiteren Aspekt der vorliegenden Erfindung wird ein wässriges Beschichtungsmittel bereitgestellt, welches mindestens eine wässrige erfindungsgemäße Polyurethanharnstoff-Dispersion in sämtlichen Ausgestaltungen und Ausführungsformen sowie mindestens einen Hilfs- und/oder Zusatzstoff enthält.

Dabei kann das erfindungsgemäße Beschichtungsmittel auch eine Mischung der erfindungsgemäßen Polyurethanharnstoffdispersionen enthalten.

Geeignete Hilfs- oder Zusatzstoffe zur Formulierung von Faserschlichten sind dem Fachmann bekannt. Dabei handelt es sich z.B. um Antioxidationsmittel, UV-Stabilisatoren, Verlaufsmittel, Biozide, Antistatika, Gleitmittel oder Haftvermittler.

Als Haftvermittler können die bekannten Silan-Haftvermittler wie 3-Aminopropyltrimethoxy- bzw. -triethoxysilan, N-(2-Aminoethyl)-3-aminopropyltrimethoxysilan, 3-Glycidylpropyltrimethoxy-silan, Vinyltrimethoxysilan, Vinyltriethoxysilan, 3-Methacryloxypropyltriethoxysilan oder Mischungen dieser Verbindungen eingesetzt werden.

Der Haftvermittler wird bevorzugt zu 0,01 bis 1,50 Gew.-%, besonders bevorzugt 0,05 bis 1,00 Gew.-% und ganz besonders bevorzugt 0,1 bis 0,75 Gew.-% bezogen auf das Gesamtgewicht der Beschichtungszusammensetzung eingesetzt.

Ferner können die erfindungsgemäßen Beschichtungsmittel ein oder mehrere nicht-ionische und/oder ionische Gleitmittel enthalten, wie Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle oder Wachse. Diese Gleitmittel verringern den Interfilament-Abrieb zwischen Fasern.

Das Gleitmittel wird bevorzugt zu 0,01 bis 1,50 Gew.-%, besonders bevorzugt 0,05 bis 1,00 Gew.-% und ganz besonders bevorzugt 0,1 bis 0,75 Gew.-% bezogen auf das Gesamtgewicht der Beschichtungszusammensetzung eingesetzt.

Die erfindungsgemäßen Beschichtungsmittel können auch ein oder mehrere Antistatika enthalten. Beispielweise sind zu nennen Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen.

Die erfindungsgemäßen Faserschlichten können neben den erfindungsgemäßen Dispersionen auch weitere, andere wässrige Filmbildner enthalten wie z.B. Epoxyemulsionen, Polyacrylatdispersionen, Vinylacetatdispersionen, Polyesteremulsionen, Polypropylendispersionen, Urethanacrylate, Epoxyacrylate sowie hochmolekulare Polyurethanharnstoffdispersionen.

Ebenfalls Gegenstand der vorliegenden Erfindung sind wässrige Beschichtungsmittel enthaltend die erfindungsgemäße Polyurethanpolyharnstoff-Dispersion sowie ein Vernetzer ausgewählt aus der Gruppe der wasserdispergierbaren oder wasserlöslichen blockierten Polyisocyanate.

Als Vernetzer werden blockierte Polyisocyanate verwendet, die gegebenenfalls in wasserdispergierbarer bzw. wasserlöslicher Form vorliegen oder als wässrige Dispersion bzw. Lösung eingesetzt werden. Die blockierten Polyisocyanate weisen eine (mittlere) NCO-Funktionalität von 2,0 bis 5,0, bevorzugt von 2,3 bis 4,5, einen Gehalt an Isocyanatgruppen (unblockiert und blockiert) von 5,0 bis 27,0 Gew.-%, bevorzugt von 14,0 bis 24,0 Gew.-% und einen Gehalt an monomeren Diisocyanaten von weniger als 1 Gew.-%, bevorzugt weniger als 0,5 Gew.-% auf. Die Isocyanatgruppen der Polyisocyanate der wasserdispergierbaren bzw. wasserlöslichen blockierten Polyisocyanate liegen zu mindestens 50 %, bevorzugt zu mindestens 60 % und besonders bevorzugt zu mindestens 70 % in blockierter Form vor. Die Herstellung der wasserdispergierbaren, blockierten Polyisocyanate II) kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Die erfindungsgemäßen Beschichtungsmittel weisen bevorzugt eine Gesamtmenge an nichtwässriger Bestandteile von 1 bis 10, bevorzugt 2 bis 8, besonders bevorzugt 3 bis 5 Gew.-% in Bezug auf das Gesamtgewicht der Beschichtungszusammensetzung auf.

Die Herstellung der erfindungsgemäßen Beschichtungsmittel kann nach den an sich bekannten Methoden erfolgen. Bevorzugt wird in einem geeigneten Mischbehälter Wasser vorgelegt und unter Rühren das Bindemittel, der Härter und anschließend das Gleitmittel und gegebenenfalls weitere Hilfsmittel zugesetzt. Danach wird der pH-Wert auf 5 - 7 eingestellt und ein Hydrolysat eines Haftvermittlers zugesetzt. Nach einer weiteren Rührzeit von 15 Minuten ist das Beschichtungsmittel gebrauchsfertig und kann gegebenenfalls nach pH-Wert Anpassung appliziert werden.

Die Beschichtungsmittel, bevorzugt eingesetzt als Schlichtenzusammensetzungen, können über beliebige Methoden, beispielsweise mittels Sprüh- oder Walzapplikatoren auf ein geeignetes Substrat appliziert und ausgehärtet werden.

Geeignete Substrate sind z.B. Kunststoffe, Metalle, und Glas.

### Faser

In einem weiteren Aspekt der vorliegenden Erfindung wird eine Faser bereitgestellt, welche zumindest auf einem Teil ihrer Oberfläche das gehärtete erfindungsgemäße Beschichtungsmittel in sämtlichen Ausgestaltungen und Ausführungsformen aufweist. Bevorzugt ist es hierbei, dass die gesamte Oberfläche der Faser mit dem erfindungsgemäßen gehärteten Beschichtungsmittel beschichtet ist.

Die Faser wird bevorzugt ausgewählt aus der Gruppe, bestehend aus Glasfasern, Carbonfasern, Basaltfasern, Kunstfasern und beliebigen Mischungen dieser Fasern. Besonders bevorzugt sind Glasfasern. Für die beschlichteten Glasfasern sind sowohl die für die Glasseidenfabrikation verwendeten, bekannten Glastypen wie E-, A-, C-, und S- Glas nach DIN 1259-1 als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

In einem weiteren Aspekt der vorliegenden Erfindung wird ein Verfahren zur Herstellung der erfindungsgemäßen Faser bereitgestellt, umfassend die Schritte:
(i) Bereitstellen mindestens einer Faser;
(ii) Aufbringen der erfindungsgemäßen wässrigen Beschichtungszusammensetzung in sämtlichen Ausgestaltungen und Ausführungsformen auf wenigstens einen Teil einer Oberfläche der mindestens einen Faser aus (i), wodurch eine zumindest teilweise beschichtete Faser entsteht, und
(iii) Härten der Beschichtung der zumindest teilweise beschichteten Faser aus (ii).

Das Verfahren zur Herstellung, das Verfahren der Beschlichtung und die Nachbearbeitung der Glasfasern ist bekannt und beispielsweise in K.L. Loewenstein "The Manufacturing Technology of Continous Glass Fibres", Elsevier Scientific Publishing Corp., Amsterdam, London, New York, 1983, beschrieben.

Unter der Härtung des Schritts (iii) wird bevorzugt eine Trocknung verstanden. Die Härtung der erfindungsgemäßen Beschichtungszusammensetzung erfolgt bevorzugt durch Erwärmung der beschichteten Faser auf eine Temperatur in einem Bereich von 50 bis 180 °C, besonders bevorzugt 70 bis 160 °C und ganz besonders 80 bis 150 °C.

Die Fasern (Monofilamente), auf die das erfindungsgemäße Beschichtungsmittel aufgetragen wurde, können zusammengefügt werden, um einen Strang einer Vielzahl von Fasern zu bilden (Multifilament). Der Strang kann auf einer Wickelform, die auf einer rotierenden Spannzange angeordnet ist, aufgewickelt werden. Die Wickelform kann von der Spannzange entfernt werden und in einem Ofen bei einer Temperatur von etwa 50 °C bis etwa 150 °C etwa 10 bis 13 Stunden getrocknet werden, wobei Glasfaserstränge mit einem getrocknetem Rückstand der Beschichtungszusammensetzung darauf erzeugt werden. Die Trocknungstemperatur wird von solchen Variablen, wie dem Prozentsatz der Feststoffe der Beschichtungszusammensetzung, den Bestandteilen der Beschichtungszusammensetzung und der Art der Glasfasern abhängen. Die Beschichtungszusammensetzung stellt bevorzugt Glasfaserstränge mit etwa 0,3 bis 2,0 Gewichtsprozent der getrockneten Beschichtungszusammensetzung auf dem Strang, bezogen auf das Gesamtgewicht des Glases und der getrockneten Beschichtungszusammensetzung bereit.

Die Stränge können von der Wickelform übertragen und mit einer Vielzahl von anderen Strängen vereinigt werden, wobei ein Roving gebildet wird. Der Roving kann in Form von kontinuierlichen Strängen, gewebten Glasseidenmatten oder Stapelglasseiden verwendet werden, um ein wärmehärtbares Polymer mittels eines bekannten Verfahrens, beispielsweise durch Strangziehverfahren für verstärkte Kunststoffe, zu verstärken.

### Verbundwerkstoff

In einem weiteren Aspekt der vorliegenden Erfindung wird ein Verbundwerkstoff bereitgestellt, umfassend mindestens eine erfindungsgemäße Faser in sämtlichen Ausgestaltungen und Ausführungsformen und einen Matrixwerkstoff.

Dabei ist der Verbundwerkstoff bevorzugt dadurch gekennzeichnet, dass die mindestens eine Faser ausgewählt wird aus der Gruppe, bestehend aus Glasfasern, Carbonfasern, Basaltfasern, Kunstfasern und beliebigen Mischungen dieser Fasern. Besonders bevorzugt sind Glasfasern. Für die beschlichteten Glasfasern sind sowohl die für die Glasseidenfabrikation verwendeten, bekannten Glastypen wie E-, A-, C-, und S- Glas nach DIN 1259-1 als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Bevorzugt wird der Matrixwerkstoff ausgewählt aus der Gruppe, bestehend aus einem Polyepoxid, einem ungesättigten Polyester, einem Polyurethan, einem Polyvinylester und beliebigen Mischungen dieser Polymere. Besonders bevorzugt ist als Matrixwerkstoff ein Polyepoxid. Es wurde überraschenderweise herausgefunden, dass unter Verwendung der erfindungsgemäßen Beschichtungszusammensetzung in oder als Schlichteformulierung ein Verbundwerkstoff mit einem Polyepoxid als Matrixwerkstoff erhalten wird, welcher vergleichbare Eigenschaften, vorzugsweise bessere Eigenschaften wie/als eine Epoxid-basierte Schlichtenzusammensetzung aufweist. Ohne an eine Theorie gebunden sein zu wollen, wird davon ausgegangen, dass die freien -COOH-Gruppen der erfindungsgemäßen Polyurethanharnstoff-Dispersion mit den Epoxid-Ringen des Matrix-Werkstoffes reagieren, d. h. diese öffnen, und somit kovalente Bindungen zwischen der Schlichte und dem Matrix-Werkstoff ausgebildet werden. Dies führt zu hervorragenden mechanischen Eigenschaften, insbesondere Querzugfestigkeiten, des Verbundwerkstoffes.

Besonders bevorzugt weist der erfindungsgemäße Verbundwerkstoff 20 bis 90 Gew.-%, insbesondere bevorzugt 30 bis 80 Gew.-% der Faser bezogen auf das Gesamtgewicht der Faser und dem Matrix-Werkstoff auf.

### Beispiele

### Rohstoffe:

Polyester 170 HN (170 HN): Polyesterpolyol aus Adipinsäure, 1,6-Hexandiol und Neopentylglykol mit einer Molmasse von 1700 g/mol (BAYER AG, Leverkusen)
Polyester PEI 200 H (PEI 200 H): Polyester aus Adipinsäure, Isophthalsäure und 1,6-Hexandiol mit einer Molmasse von 2000 g/mol (BAYER AG, Leverkusen)
LB 25: Monohydroxy-funktioneller Polyether aus Ethylenoxid und Propylenoxid mit einem Gewichtsanteil von 84% Ethylenoxid und einer Molmasse von 2250 g/mol (BAYER AG, Leverkusen)
Desmodur I (IDPI): Isophorondiisocyanat (BAYER AG, Leverkusen)
Desmodur H (HDI): Hexamethylendiisocyanat (BAYER AG, Leverkusen)
DMPS: Dimethylolpropansäure (DMPS, ALDRICH, DE)
6-Aminohexansäure (AHS, ALDRICH, DE)
Diethanolamin (DEA, ALDRICH DE)
Isophorondiamin (IPDA, ALDRICH DE)
Carbohydrazid (CH, ALDRICH DE)

### Methoden:

Die Bestimmung der Viskosität erfolgte mittels eines Haake-Viskosimeters bei Raumtemperatur (23 °C) und einer Scherrate von 45 s-1.

Die Bestimmung der Festkörpergehalte (FK) erfolgte nach DIN-EN ISO 3251.

Die mittleren Teilchengrößen (MTG) wurden mittels statischer Lichtstreuung ermittelt (Malvern Instruments, Typ: Zetasizer 1000). Die angegebenen Wert sind die D50-Wert des Z-Mittels.

Die Bestimmung des NCO-Gehalts erfolgte volumetrisch in Anlehnung an die DIN-ISO 11909.

### Herstellung der Glasfasern:

Die Herstellung der Glasfasern erfolgte auf einer Laborspinnalage des Leibniz Instituts für Polymerforschung (Dresden). Dabei wurden die E-Glassfasern mit einem Durchmesser von 17 µm und einer Feinheit von 120 tex direkt nach dem Austritt aus der Schmelzdüse mittels eines Rollenapplikators geschlichtet wobei der Filmbildner in der Schlichteformulierung variiert wurde. Die Glasfaserrovings wurden anschließend für 5 h bei 130 °C getrocknet.

### Herstellung der unidirektionalen Verbundprüfkörper:

Aus den entsprechenden Faserrovings wurden unidirektionale Glasfaser-Epoxy-Verbunde hergestellt, indem die zuvor gewickelten Glasfasern mit einem 2K Epoxyharz bei 80 °C infiltriert und anschließend für 8 h bei 90 °C gehärtet wurden. Als Injektionsharz wurde eine Mischung Epikote RIM 145 und Epikure RIMH 145 unter Katalyse von RIMC145 verwendet, das Mischungsverhältnis betrug 100/82/0,5.

### Bestimmung der Querzugfestigkeiten:

Die Querzugfestigkeit des Verbundprüfkörpers erfolgte nach der ISO 527 mit einer Zugeschwindigkeit von 1 mm/min

### Herstellung der Dispersionen:

### Bsp. 1 (Gegenbeispiel)

291,0 g des Polyesters PE 170 HN werden zusammen mit 44,5 g LB 25 in einem Reaktionsgefäß vorgelegt und auf 75 °C unter Rühren aufgeheizt. Anschließend wird eine Mischung von 32,3 g IPDI mit 24,4 g HDI innerhalb von wenigen Minuten zugegeben und die Reaktionstemperatur wird dabei auf 115 °C erhöht. Nach Erreichen des gewünschten NCO-Wertes (2,17 Gew%, Theorie 2,35 Gew%) wird das entstandene Präpolymer in 697 g Aceton bei 40 °C gelöst. Danach wird eine Mischung von 9,1 g DEA mit 11,3 g IPDA in 214,5 g Wasser innerhalb von 2 min zugegeben und es wird weitere 15 min. nachgerührt. Die Dispergierung erfolgt innerhalb von 30 min. durch Zugabe von 517 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 2 (erfindungsgemäß)

280,0 g des Polyesters PE 170 HN werden zusammen mit 44,5 g LB 25 und 11,7 DMPS in einem Reaktionsgefäß vorgelegt und auf 75 °C unter Rühren aufgeheizt. Anschließend wird eine Mischung von 47,6 g IPDI mit 36,0 g HDI innerhalb von wenigen Minuten zugegeben und die Reaktionstemperatur wird dabei auf 115 °C erhöht. Nach Erreichen des gewünschten NCO-Wertes (2,72 Gew%, Theorie 3,08 Gew%) wird das entstandene Präpolymer in 784 g Aceton bei 40 °C gelöst. Danach wird eine Mischung von 22,2 g DEA mit 9,5 g IPDA in 158,6 g Wasser innerhalb von 2 min zugegeben und es wird weitere 15 min. nachgerührt. Die Dispergierung erfolgt innerhalb von 30 min. durch Zugabe von 550 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 3 (erfindungsgemäß)

218,0 g des Polyesters PE 170 HN werden zusammen mit 65,5 g LB 25 und 16,6 DMPS in einem Reaktionsgefäß vorgelegt und auf 75 °C unter Rühren aufgeheizt. Anschließend wird eine Mischung von 47,6 g IPDI mit 36,0 g HDI innerhalb von wenigen Minuten zugegeben und die Reaktionstemperatur wird dabei auf 115 °C erhöht. Nach Erreichen des gewünschten NCO-Wertes (3,34 Gew%, Theorie 3,53 Gew%) wird das entstandene Präpolymer in 683 g Aceton bei 40 °C gelöst. Danach wird eine Mischung von 22,2 g DEA mit 9,5 g IPDA in 158,g g Wasser innerhalb von 2 min zugegeben und es wird weitere 15 min. nachgerührt. Die Dispergierung erfolgt innerhalb von 30 min. durch Zugabe von 465 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 4 (Gegenbeispiel)

597,7 g des Polyesters PEI 200 H werden zusammen mit 112,3 g LB 25 und 20,1 g DMPS in einem Reaktionsgefäß vorgelegt und auf 75 °C unter Rühren aufgeheizt. Anschließend wird eine Mischung von 81,5 g IPDI mit 61,7 g HDI innerhalb von wenigen Minuten zugegeben und die Reaktionstemperatur wird dabei auf 115 °C erhöht. Nach Erreichen des gewünschten NCO-Wertes (2,42 Gew%, Theorie 2,66 Gew%) wird das entstandene Präpolymer in 1553 g Aceton bei 40 °C gelöst. Danach wird eine Mischung von 22,9 g DEA mit 28,6 g IPDA in 257,4 g Wasser innerhalb von 2 min zugegeben und es wird weitere 15 min. nachgerührt. Die Dispergierung erfolgt innerhalb von 30 min. durch Zugabe von 465 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 5 (Gegenbeispiel)

667 g des Polyesters PEI 200 H werden zusammen mit 81,9 g LB 25 in einem Reaktionsgefäß vorgelegt und auf 75 °C unter Rühren aufgeheizt. Anschließend wird eine Mischung von 59,4 g IPDI mit 45,0 g HDI innerhalb von wenigen Minuten zugegeben und die Reaktionstemperatur wird dabei auf 115 °C erhöht. Nach Erreichen des gewünschten NCO-Wertes (1,84 Gew%, Theorie 1,99 Gew%) wird das entstandene Präpolymer in 1518 g Aceton bei 40 °C gelöst. Danach wird eine Mischung von 27,7 g DEA mit 11,9 g IPDA in 198,2 g Wasser innerhalb von 2 min zugegeben und es wird weitere 15 min. nachgerührt. Die Dispergierung erfolgt innerhalb von 30 min. durch Zugabe von 1142 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 6 (erfindungsgemäß)

667,3 g des Polyesters PEI 200 H werden zusammen mit 81,9 g LB 25 in einem Reaktionsgefäß vorgelegt und auf 75 °C unter Rühren aufgeheizt. Anschließend wird eine Mischung von 59,4 g IPDI mit 45,0 g HDI innerhalb von wenigen Minuten zugegeben und die Reaktionstemperatur wird dabei auf 115 °C erhöht. Nach Erreichen des gewünschten NCO-Wertes (1,95 Gew%, Theorie 1,99 Gew%) wird das entstandene Präpolymer in 1516 g Aceton bei 40 °C gelöst. Danach wird eine Mischung von 34,6 g AHS mit 11,9 g IPDA in 232,6 g Wasser innerhalb von 2 min zugegeben und es wird weitere 15 min. nachgerührt. Die Dispergierung erfolgt innerhalb von 30 min. durch Zugabe von 1118 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 7 (erfindungsgemäß)

191,3 g des Polyesters PE 170 HN werden zusammen mit 39,2 g LB 25 und 34,9 g DMPS in einem Reaktionsgefäß vorgelegt und auf 75 °C unter Rühren aufgeheizt. Anschließend wird eine Mischung von 67,9 g IPDI mit 51,4 g HDI innerhalb von wenigen Minuten zugegeben und die Reaktionstemperatur wird dabei auf 115 °C erhöht. Nach Erreichen des gewünschten NCO-Wertes (4,10 Gew%, Theorie 5,04 Gew%) wird das entstandene Präpolymer in 684 g Aceton bei 40 °C gelöst. Danach werden 48,5 g DEA in 48,5 g Wasser innerhalb von 2 min zugegeben und es wird weitere 15 min. nachgerührt. Die Dispergierung erfolgt innerhalb von 30 min. durch Zugabe von 601 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

### Bsp. 8 (Gegenbeispiel)

304 g des Polyesters PE 170 HN werden zusammen mit 18,2 g LB 25 in einem Reaktionsgefäß vorgelegt und auf 75 °C unter Rühren aufgeheizt. Anschließend werden 91,0 g IPDI innerhalb von wenigen Minuten zugegeben und die Reaktionstemperatur wird dabei auf 115 °C erhöht. Nach Erreichen des gewünschten NCO-Wertes (4,29 Gew%, Theorie 4,61 Gew%) wird das entstandene Präpolymer in 687 g Aceton bei 40 °C gelöst. Danach wird eine Mischung von 54,0 g CH (als 10%ige, wässrige Lösung) mit 26,5 g IPDA innerhalb von 2 min zugegeben und es wird weitere 15 min. nachgerührt. Die Dispergierung erfolgt innerhalb von 30 min. durch Zugabe von 582 g vollentsalztem Wasser unter ständigem Rühren. Das verbliebene Aceton wird bei 45 °C und einem Druck von 120 mbar abdestilliert und es entsteht eine Lösemittelfreie Polyurethandispersion mit denen in Tab. 1 aufgeführten Kenndaten.

**Tab. 1: Kenndaten der Beispieldispersionen; bei alle Beispieldispersionen sind 0 % der -COOH-Gruppen neutralisiert**

| Bsp. | KettenabbruchGrad % | Anteil COOH / Gew% | FK / Gew% | pH | Viskosität / mPas | MTG / nm |
|---|---|---|---|---|---|---|
| 1* | 18 | 0 | 42,9 | 6,6 | 320 | 110 |
| 2 | 28 | 0,83 | 41,4 | 5,4 | 215 | 115 |
| 3 | 28 | 1,34 | 42,7 | 5,3 | 430 | 80 |
| 4* | 18 | 0,73 | 39,2 | 5,3 | 140 | 85 |
| 5* | 28 | 0 | 43,4 | 8,7 | 165 | 330 |
| 6 | 28 | 1,31 | 40,9 | 5,4 | 35 | 165 |
| 7 | 39 | 2,48 | 41,1 | 3,8 | 35 | 300 |
| 8* | 1 | 0 | 42,5 | 5,9 | 20 | 280 |

| | | | | | | |
|---|---|---|---|---|---|---|
| *Gegenbeispiele | | | | | | |

### Herstellung der Glasfaserschlichten

Zur Herstellung der Glasfaserschlichten werden die beispielhaften Dispersionen sowie eine kommerziell erhältliche wässrige Epoxydispersion verdünnt vorgelegt und mit einer Mischung von Silan-Haftvermittlern unter Rühren zugegeben. Anschließend erfolgt die Zugabe eines kationischen Tensids. Die Schlichten weisen jeweils einen Feststoffgehalt von 3,6 % - 3,7% auf wobei der Feststoff aus je ca. 2,7% der beispielhaften Dispersion, je 0,5 Gew% einer 1:1 Mischung aus Aminopropyltrioethoxysilan und Glycidyloxypropyltriethoxysilan und je 0,4% eines kationischen Tensids (Typ Katax 6760 L). Die resultierende Schlichte weist einen pH-Wert von 5,0 - 6,0 auf und eine Oberflächenspannung von 30 - 32 mN/m. Innerhalb von 24 h wird keinerlei Sedimentation beobachtet.

### Mechanische Eigenschaften der Verbundprüfkörper

Die durch Infiltration der gewickelten UD-Platten hergestellten Prüfkörper werden hinsichtlich der Querzugfestigkeit mechanisch charakterisiert, die dabei ermittelten Daten finden sich in Tab. 2.

**Tab. 2: Querzugfestigkeiten der Verbundprüfkörper**

| Bsp. | KettenabbruchGrad / mol% | Anteil COOH / Gew% | Querzugfestigkeit / MPa |
|---|---|---|---|
| 1* | 18 | 0 | 37 ± 2 |
| 2 | 28 | 0,83 | 49 ± 2 |
| 3 | 28 | 1,34 | 56 ± 3 |
| 4* | 18 | 0,73 | 40 ± 3 |
| 5* | 28 | 0,73 | 40 ± 2 |
| 6 | 28 | 1,31 | 56 ± 2 |
| 7 | 39 | 2,48 | 77 ± 2 |
| 8* | 1 | 0 | 36 ± 2 |
| 9** | X | X | 71 ± 5 |

| | | | |
|---|---|---|---|
| * Gegenbeispiele ** Faserschlichte basierend auf Epoxyemulsion | | | |

Man erkennt, dass die erfindungsgemäßen Dispersionen zum Teil zu Querzugfestigkeiten führen, die ähnlich dem Niveau einer Standard-Epoxyemulsion sind. Ebenso ist deutlich zu erkennen, dass die spezielle Kombination des Kettenabbruchgrades und des Gehalts an -COOH-Gruppen zu einer Verbesserung der Querzugfestigkeiten führen. Dabei ist es besonders vorteilhaft, wenn ein relativ hoher Kettenabbruchsgrad mit einem relativ hohen Gehalt an -COOH-Gruppen verwendet wird (siehe Beispiel 7).

## Patentansprüche

1. Wässrige Polyurethanharnstoff-Dispersion, wobei der Polyurethanharnstoff mindestens die folgenden Komponenten als Aufbaukomponenten umfasst:
A) mindestens eine Polyisocyanatverbindung mit einer Funktionalität von ≤ 2,
B) mindestens ein Polyol,
C) mindestens eine Aufbaukomponente, welche sich von den Komponenten B), D) und, falls vorhanden, der Komponente E) unterscheidet und welche mindestens eine gegenüber Isocyanatgruppen reaktive Gruppe und mindestens eine -COOH-Gruppe aufweist, und
D) mindestens ein nicht-ionisches Hydrophilierungsmittel, welches mindestens eine gegenüber Isocyanatgruppen reaktive Gruppe aufweist, sowie
E) gegebenenfalls mindestens eine gegenüber Isocyanatgruppen reaktive, monofunktionelle Verbindung, welche von C) und D) verschieden ist und welche keine ungesättigten Gruppen oder Epoxy-Gruppen aufweist,
**dadurch gekennzeichnet,**
**dass** der Polyurethanharnstoff einen Gehalt an -COOH-Gruppen von 0,75 bis 7,50 Gew.-% in Bezug auf das Gesamtgewicht des Polyurethanharnstoffs im getrockneten Zustand aufweist und 0 bis 35 % dieser -COOH-Gruppen neutralisiert sind und
**dass** 5 bis 50 mol-% der Isocyanatgruppen der Komponente A) mit einer monofunktionellen Komponente umgesetzt sind, wobei die monofunktionelle Komponente ausgewählt wird aus der Gruppe, bestehend aus einer der Komponenten C), D), E) und der Summe einer beliebigen Mischung der Komponenten C), D) und E) unter der Voraussetzung, dass, wenn weder die Komponente C) noch die Komponente D) monofunktionell ist, Komponente E) zwingend als Aufbaukomponente vorhanden ist.

2. Wässrige Polyurethanharnstoff-Dispersion nach Anspruch 1, **dadurch gekennzeichnet, dass** 20 bis 48 mol-% der Isocyanatgruppen der Komponente A) mit einer monofunktionellen Komponente umgesetzt sind, wobei die monofunktionelle Komponente ausgewählt wird aus der Gruppe, bestehend aus einer der Komponenten C), D), E) und der Summe einer beliebigen Mischung der Komponenten C), D) und E) unter der Voraussetzung, dass, wenn weder die Komponente C) noch die Komponente D) monofunktionell ist, Komponente E) zwingend als Aufbaukomponente vorhanden ist.

3. Wässrige Polyurethanharnstoff-Dispersion nach einem der Ansprüche 1 oder 2, **dadurch gekennzeichnet, dass** der 0 bis 10 % der -COOH-Gruppen neutralisiert sind.

4. Wässrige Polyurethanharnstoff-Dispersion nach einem der Ansprüche 1 bis 3, **dadurch gekennzeichnet, dass** der Polyurethanharnstoff einen Gehalt an -COOH-Gruppen von 1,00 bis 5,00 Gew.-% in Bezug auf das Gesamtgewicht des Polyurethanharnstoffs im getrockneten Zustand aufweist.

5. Wässrige Polyurethanharnstoff-Dispersion nach einem der Ansprüche 1 bis 4, **dadurch gekennzeichnet, dass** Komponente C) ausgewählt wird aus der Gruppe, bestehend aus Monohydroxycarbonsäuren, Dihydroxycarbonsäuren, Dihydroxydicarbonsäuren, Trihydroxycarbonsäuren, Monoaminocarbonsäuren, Diaminocarbonsäuren, Triaminocarbonsäuren und beliebigen Mischungen davon.

6. Wässrige Polyurethanharnstoff-Dispersion nach einem der Ansprüche 1 bis 5, **dadurch gekennzeichnet, dass** Komponente D) eine monofunktionelle Polyethylenglykol-haltige Komponente ist, deren Anteil an Polyethylenglykol mindestens 50 Gew.-% beträgt und eine Molmasse Mn von 1200 g/mol bis 3000 g/mol aufweist.

7. Wässrige Polyurethanharnstoff-Dispersion nach einem der Ansprüche 1 bis 6, **dadurch gekennzeichnet, dass** Komponente B) mindestens ein aliphatisches Polyesterpolyol ist.

8. Verwendung der wässrigen Polyurethanharnstoff-Dispersion nach einem der Ansprüche 1 bis 7 zur Herstellung von Beschichtungsmitteln.

9. Verwendung nach Anspruch 8, wobei das Beschichtungsmittel eine Glasfaserschlichte ist.

10. Wässriges Beschichtungsmittel, enthaltend mindestens eine wässrige Polyurethanharnstoff-Dispersion nach einem der Ansprüche 1 bis 7 sowie mindestens einen Hilfs- und/oder Zusatzstoff.

11. Faser, welche zumindest auf einem Teil ihrer Oberfläche das gehärtete Beschichtungsmittel nach Anspruch 10 aufweist.

12. Verfahren zur Herstellung der Faser nach Anspruch 11, umfassend die Schritte:
(i) Bereitstellen mindestens einer Faser;
(ii) Aufbringen der wässrigen Beschichtungszusammensetzung nach Anspruch 10 auf wenigstens einen Teil einer Oberfläche der mindestens einen Faser aus (i), wodurch eine zumindest teilweise beschichtete Faser entsteht, und
(iii) Härten der Beschichtung der zumindest teilweise beschichteten Faser aus (ii).

13. Verbundwerkstoff, umfassend mindestens eine Faser nach Anspruch 11 und einen Matrixwerkstoff.

14. Verbundwerkstoff nach Anspruch 11, **dadurch gekennzeichnet, dass** die mindestens eine Faser ausgewählt wird aus der Gruppe, bestehend aus Glasfasern, Carbonfasern, Basaltfasern, Kunstfasern und beliebigen Mischungen dieser Fasern.

15. Verbundwerkstoff nach einem der Ansprüche 11 oder 12, **dadurch gekennzeichnet, dass** der Matrixwerkstoff ausgewählt wird aus der Gruppe, bestehend aus einem Polyepoxid, einem ungesättigten Polyester, einem Polyvinylester, einem Polyurethan und beliebigen Mischungen dieser Polymere.

## Claims

1. Aqueous polyurethaneurea dispersion, the polyurethaneurea comprising at least the following components as formation components:
A) at least one polyisocyanate compound having a functionality of ≤ 2,
B) at least one polyol,
C) at least one formation component which differs from components B), D) and, if present, component E) and which has at least one group reactive toward isocyanate groups and at least one -COOH group, and
D) at least one nonionic hydrophilizing agent having at least one group reactive toward isocyanate groups, and
E) optionally at least one monofunctional compound reactive toward isocyanate groups which is different from C) and D) and does not have any unsaturated groups or epoxy groups,
**characterized in that**
the polyurethaneurea has a content of -COOH groups of 0.75% to 7.50% by weight in relation to the total weight of the polyurethaneurea in the dried state and 0% to 35% of these -COOH groups have been neutralized, and
**in that** 5 to 50 mol% of the isocyanate groups of component A) have been reacted with a monofunctional component, said monofunctional component being selected from the group consisting of one of components C), D), E) and the sum total of any desired mixture of components C), D) and E), provided that, when neither component C) nor component D) is monofunctional, component E) is necessarily present as formation component.

2. Aqueous polyurethaneurea dispersion according to Claim 1, **characterized in that** 20 to 48 mol% of the isocyanate groups of component A) have been reacted with a monofunctional component, said monofunctional component being selected from the group consisting of one of components C), D), E) and the sum total of any desired mixture of components C), D) and E), provided that, when neither component C) nor component D) is monofunctional, component E) is necessarily present as formation component.

3. Aqueous polyurethaneurea dispersion according to either of Claims 1 and 2, **characterized in that** 0% to 10% of the -COOH groups have been neutralized.

4. Aqueous polyurethaneurea dispersion according to any of Claims 1 to 3, **characterized in that** the polyurethaneurea has a content of -COOH groups of 1.00% to 5.00% by weight in relation to the total weight of the polyurethaneurea in the dried state.

5. Aqueous polyurethaneurea dispersion according to any of Claims 1 to 4, **characterized in that** component C) is selected from the group consisting of monohydroxycarboxylic acids, dihydroxycarboxylic acids, dihydroxydicarboxylic acids, trihydroxycarboxylic acids, monoaminocarboxylic acids, diaminocarboxylic acids, triaminocarboxylic acids and any desired mixtures thereof.

6. Aqueous polyurethaneurea dispersion according to any of Claims 1 to 5, **characterized in that** component D) is a monofunctional polyethylene glycol-containing component wherein the proportion of polyethylene glycol is at least 50% by weight and which has a molar mass Mn 1200 g/mol to 3000 g/mol.

7. Aqueous polyurethaneurea dispersion according to any of Claims 1 to 6, **characterized in that** component B) is at least one aliphatic polyester polyol.

8. Use of the aqueous polyurethaneurea dispersion according to any of Claims 1 to 7 for production of coating compositions.

9. Use according to Claim 8, wherein the coating composition is a glass fibre size.

10. Aqueous coating composition comprising at least one aqueous polyurethaneurea dispersion according to any of Claims 1 to 7 and at least one of auxiliary and/or additive.

11. Fibre having, at least on part of its surface, the cured coating composition according to Claim 10.

12. Process for producing the fibre according to Claim 11, comprising the steps of:
(i) providing at least one fibre;
(ii) applying the aqueous coating composition according to Claim 10 to at least a portion of a surface of the at least one fibre from (i), giving rise to an at least partly coated fibre, and
(iii) curing the coating of the at least partly coated fibre from (ii).

13. Composite material comprising at least one fibre according to Claim 11 and a matrix material.

14. Composite material according to Claim 11, **characterized in that** the at least one fibre is selected from the group consisting of glass fibres, carbon fibres, basalt fibres, synthetic fibres and any desired mixtures of these fibres.

15. Composite material according to either of Claims 11 and 12, **characterized in that** the matrix material is selected from the group consisting of a polyepoxide, an unsaturated polyester, a polyvinyl ester, a polyurethane and any desired mixtures of these polymers.

## Revendications

1. Dispersion aqueuse de polyuréthane-urée, dans laquelle le polyuréthane-urée comprend au moins les composants suivants en tant que composants constitutifs :
A) au moins un composé de polyisocyanate ayant une fonctionnalité ≤ 2,
B) au moins un polyol,
C) au moins un composant constitutif qui diffère des composants B), D) et, s'il est présent, du composant E), et qui comprend au moins un groupe réactif avec les groupes isocyanate et au moins un groupe -COOH, et
D) au moins un agent d'hydrophilisation non ionique, qui comprend au moins un groupe réactif avec les groupes isocyanate, ainsi que
E) éventuellement au moins un composé monofonctionnel réactif avec les groupes isocyanate, qui est différent de C) et D) et qui ne comprend pas de groupes insaturés ou de groupes époxy,
**caractérisée en ce que**
le polyuréthane-urée présente une teneur en groupes - COOH de 0,75 à 7,50 % en poids par rapport au poids total du polyuréthane-urée à l'état sec, et 0 à 35 % de ces groupes -COOH sont neutralisés, et
5 à 50 % en moles des groupes isocyanate du composant A) sont mis en réaction avec un composant monofonctionnel, le composant monofonctionnel étant choisi dans le groupe constitué par un des composants C), D), E) et la somme d'un mélange quelconque des composants C), D) et E), à condition que lorsque ni le composant C), ni le composant D) n'est monofonctionnel, le composant E) soit obligatoirement présent en tant que composant constitutif.

2. Dispersion aqueuse de polyuréthane-urée selon la revendication 1, **caractérisée en ce que** 20 à 48 % en moles des groupes isocyanate du composant A) sont mis en réaction avec un composant monofonctionnel, le composant monofonctionnel étant choisi dans le groupe constitué par un des composants C), D), E) et la somme d'un mélange quelconque des composants C), D) et E), à condition que lorsque ni le composant C), ni le composant D) n'est monofonctionnel, le composant E) soit obligatoirement présent en tant que composant constitutif.

3. Dispersion aqueuse de polyuréthane-urée selon l'une quelconque des revendications 1 ou 2, **caractérisée en ce que** 0 à 10 % des groupes -COOH sont neutralisés.

4. Dispersion aqueuse de polyuréthane-urée selon l'une quelconque des revendications 1 à 3, **caractérisée en ce que** le polyuréthane-urée présente une teneur en groupes -COOH de 1,00 à 5,00 % en poids, par rapport au poids total du polyuréthane-urée à l'état sec.

5. Dispersion aqueuse de polyuréthane-urée selon l'une quelconque des revendications 1 à 4, **caractérisée en ce que** le composant C) est choisi dans le groupe constitué par les acides monohydroxycarboxyliques, les acides dihydroxycarboxyliques, les acides dihydroxydicarboxyliques, les acides trihydroxycarboxyliques, les acides monoaminocarboxyliques, les acides diaminocarboxyliques, les acides triaminocarboxyliques et leurs mélanges quelconques.

6. Dispersion aqueuse de polyuréthane-urée selon l'une quelconque des revendications 1 à 5, **caractérisée en ce que** le composant D) est un composant monofonctionnel contenant du polyéthylène glycol, dont la proportion de polyéthylène glycol est d'au moins 50 % en poids, et présente une masse molaire Mn de 1 200 g/mol à 3 000 g/mol.

7. Dispersion aqueuse de polyuréthane-urée selon l'une quelconque des revendications 1 à 6, **caractérisée en ce que** le composant B) est au moins un polyesterpolyol aliphatique.

8. Utilisation de la dispersion aqueuse de polyuréthane-urée selon l'une quelconque des revendications 1 à 7 pour la fabrication d'agents de revêtement.

9. Utilisation selon la revendication 8, dans laquelle l'agent de revêtement est un apprêt à base de fibres de verre.

10. Agent de revêtement aqueux, contenant au moins une dispersion aqueuse de polyuréthane-urée selon l'une quelconque des revendications 1 à 7, ainsi qu'au moins un adjuvant et/ou additif.

11. Fibre, qui comprend l'agent de revêtement durci selon la revendication 10 au moins sur une partie de sa surface.

12. Procédé de fabrication de la fibre selon la revendication 11, comprenant les étapes suivantes :
(i) la préparation d'au moins une fibre ;
(ii) l'application de la composition de revêtement aqueuse selon la revendication 10 sur au moins une partie d'une surface de ladite au moins une fibre de (i), une fibre au moins partiellement revêtue étant formée, et
(iii) le durcissement du revêtement de la fibre au moins partiellement revêtue de (ii).

13. Matériau composite, comprenant au moins une fibre selon la revendication 11 et un matériau de matrice.

14. Matériau composite selon la revendication 11, **caractérisé en ce que** ladite au moins une fibre est choisie dans le groupe constitué par les fibres de verre, les fibres de carbone, les fibres de basalte, les fibres artificielles et les mélanges quelconques de ces fibres.

15. Matériau composite selon l'une quelconque des revendications 11 ou 12, **caractérisé en ce que** le matériau de matrice est choisi dans le groupe constitué par un polyépoxyde, un polyester insaturé, un polyester de vinyle, un polyuréthane et les mélanges quelconques de ces polymères.
